# EUROPEAN PATENT SPECIFICATION

(11) **EP 3 355 529 B1**
(45) Date of publication and mention of the grant of the patent: **19.05.2021**
(21) Application number: 18153713.5
(22) Date of filing: 26.01.2018
(51) Int. Cl.: H04L 12/58

(54) **ENHANCED MESSAGE COMPOSITION AND MANAGEMENT ON A COMMUNICATION DEVICE**
VERBESSERTE NACHRICHTENZUSAMMENSETZUNG UND VERWALTUNG AUF EINER KOMMUNIKATIONSVORRICHTUNG
COMPOSITION ET DE GESTION DE MESSAGES AMÉLIORÉS SUR UN DISPOSITIF DE COMMUNICATION

(30) Priority: 27.01.2017 US 201715417904
(43) Date of publication of application: 01.08.2018
(73) Proprietor: BlackBerry Limited, Waterloo, ON N2K 0A7 (CA)
(72) Inventor: GARAI, Arkajyoti, Ottawa, Ontario K1Z 7S7 (CA); GEUE, Alan, Stittsville, Ontario K2S 0S8 (CA); KHAN, Shehryar, Kanata, Ontario K2K 0H2 (CA)
(74) Representative: Vigand, Philippe

(56) References cited:
- US-A1- 2003 167 310
- US-A1- 2013 024 780
- US-A1- 2013 097 526
- US-A1- 2013 290 435

## Description

### Background

### 1. Technical Field

The present application relates generally to messaging, and in particular to composition of messages and storage of message content data for a conversation or message thread.

### 2. Description of the Related Art

Users of mobile communication devices can receive a significant volume of messages. The volume may be due, in part, to participation in active "conversations" or message threads with other participants, each of whom may contribute to the message thread by transmitting responses to earlier messages in the thread. In an active thread, messages may be sent and received quite frequently, with the result that a user attempting to participate in the thread may find themselves composing a message in reply to a first message while other responses are still being received. Consequently, there is a risk that participants may send effectively redundant responses to other users, and may trigger additional responses leading to confusion and an increased number of messages, unnecessarily consuming computing and network resources.

US 2013/024780 A1 discloses an electronic device and method for selectively applying message actions.

US 2003/167310 A1 discloses a method and apparatus for electronic mail interaction with grouped message types.

US 2013/290435 A1 discloses an electronic device and method for updating message body content based on recipient changes.

### Summary

According to one aspect, there is provided a method according to claim 1 of the appended claims.

According to another aspect, there is provided a non-transitory computer-readable media according to claim 7 of the appended claims.

According to another aspect, there is provided a communication device according to claim 8 of the appended claims.

### Brief Description of the Drawings

In drawings which illustrate by way of example only embodiments of the present application,
FIG. 1 is a block diagram of an example data processing system for implementing the embodiments discussed herein.
FIG. 2 is a block diagram of an example mobile communication device for implementing the embodiments discussed herein.
FIG. 3 is a schematic illustrating a message thread.
FIG. 4 is a block diagram illustrating possible components of the data processing system of FIG. 1 or mobile communication device of FIG. 2.
FIGS. 5A to 5D are example user interface views displayable by a user device illustrating a first implementation for managing message content in a message thread.
FIGS. 6A to 6H are example user interface views displayable by a user device illustrating a second implementation for management message content in a message thread.
FIG. 7 is a flowchart illustrating a method of operating the user device in the implementation of FIGS. 5A to 5D.
FIG. 8 is a flowchart illustrating a method of operating the user device in the implementation of FIGS. 6A to 6D.
FIGS. 9A and 9B are flowcharts illustrating examples of draft message content storage and extraction.
FIG. 10 is a flowchart illustrating a method of operating the user device in the implementation of FIGS. 6E to 6H.

### Detailed Description

The embodiments described herein provide a method, device, system, and non-transitory medium providing certain improvements in the operation of message composition and management of draft messages on a communication device.

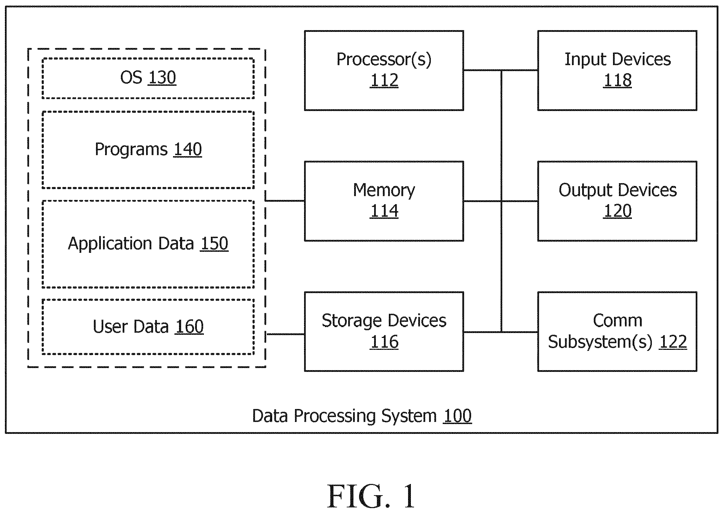

The examples described below may be implemented using any suitable user data processing and communication system. FIG. 1 is a block diagram of select components of a data processing and communication system 100 suitable for use with these examples. It will be understood by those skilled in the art that the components illustrated in FIG. 1 are merely representative of particular aspects of the system 100, and that other components that are typically included in such a device have been excluded in the drawings and this description only for succinctness. The components of the example system 100 may be embodied in a single device, such as, but not limited to, a desktop computer, workstation or terminal, or mobile computer (e.g., laptop computer, tablet computer, or smartphone). The system 100 may be embedded in another appliance, building, or vehicle, such as in an on-board computer system in a motor vehicle.

Operation of the system 100 is generally controlled by a main processor or processors 112. The system 100may be operated under mains power or may be a battery-powered device, not shown. Data, programs, and other instructions or information can be stored in one of several possible memory components of the system 100, such as internal memory 114 (which can include standard volatile and non-volatile memory components, which can be integrated with other components such as the processor 112 or provided as distinct components). Information can also be stored in the system 100 on other storage devices, which can be either internal or external. Typically, software and data components such as the operating system (OS) 130, programs (applications) 140, locally stored application data 150, and user data 160 are stored in resident persistent memory. Application data 150 and user data 160 may be stored in resident persistent memory of the client system 100, or in a storage device 116. The system 100 is provided with input devices 118, which can include user input mechanisms for data entry, as well as sensor devices. The system 100 can also include one or more output devices 120, such as a display screen. Communication functions, comprising at least data and optionally voice communications, are performed through one or more communication subsystems 122 in communication with the processor 112.

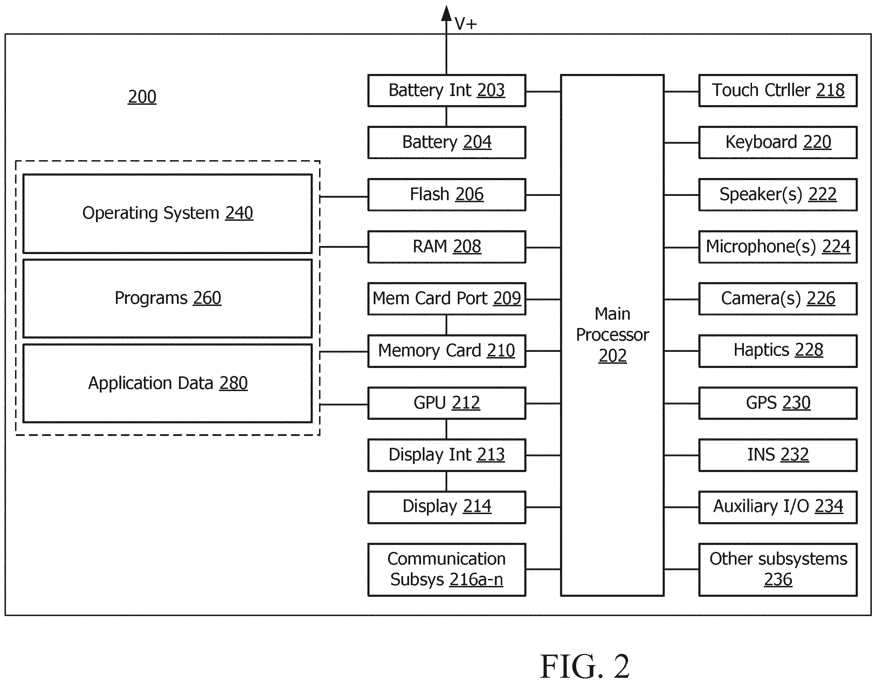

In particular, the examples described herein may be implemented on a mobile data communication device, such as a smartphone. FIG. 2 illustrates components specific to such a user device. Again, operation of the device 200 is generally controlled by a main processor or processors 202. The device 200 may be a battery-powered device and would thus include an interface 203 that may connect to one or more rechargeable batteries 204, and/or may include an adaptor for receiving and converting mains power to power the device and/or charge or recharge the battery 204. Data can be stored in flash memory 206, random access memory (RAM) 208, or other storage elements such as a memory card 210 received in an integrated memory card port 209. Typically, software and data components such as the OS 240, applications 260, and application/user data 280 are stored in resident persistent memory such as the flash memory 206, and some components of the OS 240 may be embedded as firmware in integrated memory in the processor 202. However, portions of such components may be temporarily loaded into a volatile store such as the RAM 206.

Communication functions, including data and optionally voice communications, are performed through one or more communication subsystems 216a-2016n in communication with the processor 202. Other functional components used to accomplish communication functions, such as antennae, decoders, oscillators, digital signal processors, and the like, may be considered to be part of these subsystems. Wireless communication subsystems 216a-n are used to exchange data with wireless networks or other wireless devices in accordance with one or more wireless communications standards. New wireless standards are still being defined, but it is believed that they will have similarities to any network or communication behavior described herein, and the examples described here are intended to be used with any suitable standards that are developed in the future. The wireless link connecting the communication subsystems 216a-n may operate over one or more different radiofrequency (RF) channels according to defined protocols, such as wireless LAN (e.g., one or more of the 802.11 ™ family of standards), near-field communication, Bluetooth@ and the like. The particular design of a communication subsystem is dependent on the communication network with which it is intended to operate.

The device 200 is provided with at least a display output interface 213 that connects to a display screen 214, which is either integrated into the device 200

(particularly if the device 200 is intended to be mobile or portable) or external to the device 200. Graphics data to be delivered to the display screen 214 via the interface 213 is either processed by the main processor 202, or optionally by a separate graphics processing unit (GPU) 212. In some examples, such as those discussed below, the electronic device is a touchscreen-based device in which a combination display screen-touch interface is a primary user interface mechanism, communicating information and presenting graphical user interfaces to the user while also receiving user input that may be converted into instructions for execution by the device 200. In such cases, the display screen 214 may comprise a touchscreen digitizer layered on the actual display component (e.g. liquid crystal display) of the display screen 214, in communication with a touchscreen controller 218 that processes detected touches and gestures on the touchscreen. The construction and operation of a suitable display screen and/or touchscreen interface will be understood by those skilled in the art. In some implementations, the device 200 is configured to output data to an external monitor or panel, tablet, television screen, projector, or virtual retinal display, via a data port or transmitter, such as a Bluetooth® transceiver, USB port, HDMI port, DVI port, and the like. Generally, as referred to herein, "display", "display screen", and "display interface" are intended to encompass all implementations with integrated and external display screens unless expressly or implicitly stated otherwise.

The processor 202 also interacts with additional subsystems, if present. This can include I/O devices, sensors, and other components such as a keyboard 220, speaker(s) 222, microphone(s) 224, camera(s) 226, haptics module 228 (e.g., a driver and a vibratory component, such as a motor), GPS or other location tracking module 230, other auxiliary I/O ports 234, and other subsystems 236. Other I/O subsystems can include pointing devices or touch devices such as trackballs, IR fingerprint detectors, roller wheels, optical joysticks, and trackpads. The device 200 may also be provided with an orientation or inertial navigation sensor 232 such as one or more accelerometers, used to detect the orientation of the device 200. Not all of these subsystems are required, and many may be omitted. For instance, where the primary user interface is a touchscreen, a physical keyboard may be omitted altogether. Some subsystems may be provided instead as peripheral devices that connect to the device 200 using a data port or transmitter.

While the example device 200 is a wireless communication device and may be referred to herein as a "handheld" or "mobile" device, it will be appreciated by those skilled in the art that this description is not intended to limit the scope of the described embodiments to implementation on devices with a specific form factor or devices that are intended primarily or solely for communication or productivity. The examples herein may be applied to any appropriate data processing device adapted to communicate over a fixed or wireless connection, whether or not the device is portable or wirelessly enabled, whether or not provided with voice communication capabilities, and regardless of its primary intended usage, such as productivity or entertainment. Suitable devices may therefore include, without limitation, cellular phones, smartphones, wireless organizers, personal digital assistants, desktop computers, notebook computers, laptops, tablets, terminals, gaming devices, and the like. Unless expressly stated, a user device 200 may include any such device. The configuration and operation of all such devices is generally known to those skilled in the art.

Among the programs 260 provisioned on the device 200, there may be one or more messaging applications associated with one or more messaging accounts employing one or more different messaging formats or types. These formats or types can include email, Short Message Service (SMS), Instant Messaging (IM), Multimedia Messaging Service (MMS), Visual Voicemail (VVM), PIN-based messages (messages addressed using an alternate identifier, such as a proprietary address or hardware identifier), social network messages or notifications, and calendar and task events (if not transmitted as attachments to other messages). The formatting and transmission of all such messages, storage and indexing of such messages, and the implementation of suitable messaging infrastructures and standards to support all of these example communications will also be known to those in the art. For example, email messages and services may be constructed and implemented in accordance with known Internet messaging standards including Internet Message Format RFC 5322 and RFC 2822, published by the Internet Engineering Task Force, as well as their predecessor, successor, and companion standards. IM messages include network-based and peer-to-peer messages, and such messages and services may be defined in accordance with known standards such as RFC 2779 and RFC 3921 also published by the Internet Engineering Task Force, and their companion, predecessor and successor standards. Point-to-point SMS messages may be implemented in accordance with 3GPP (3^{rd} Generation Partnership Product) Technical Specification 03.40, and optionally extended for transmission of MMS messages as specified by the Open Mobile Alliance Multimedia Messaging Service V1.3, and their companion, predecessor and successor standards. Regardless, all such messages and services intended for use with the within embodiments may also or alternatively be defined in accordance with proprietary standards and protocols. Messages may be defined, formatted, and presented using messaging applications implemented on user devices such as the device 200 described above. Messages are typically identifiable by a unique or quasi-unique handle or identifier (ID), implemented within the message format in a suitable location, for example in a header of the message. Some message formats may not include a header distinct from the body in the manner of an email format, but may nevertheless comprise content in a payload portion in addition to metadata.

Some message types permit messages to be interrelated, for example by cross-referencing identifiers, thread identifiers, subject line, or other common data comprised in the messages. Whether interrelated or not, messages exchanged between a given set of participants (senders and recipients, or originating and recipient or destination devices) may be presented by messaging applications in a conversational paradigm, chronological order, or reverse chronological order, or in any other suitable presentation form or order. An example of such a presentation form is presentation in a "conversation" or "threaded" mode, in which messages identified as belonging to a common thread are presented as a group. Another example is the use of quoted message content or message threads in the context of email messages, where a "child" message—a message that references an earlier, "parent" message, such as a "reply" or "forward" message, as conventionally understood in email messaging—reproduces header and message body content of the parent message within the body of the child message. The child message, in turn, may be a parent message to a subsequent child message.

The parent and child messages may be considered to be part of the same conversation, or "thread" of messages, based on the common data that is selected from the messages. The categorization or grouping of messages into threads may be carried out using a variety of different rules and heuristics. A simple method of categorizing messages as belonging to a single thread is to assign all messages containing the same subject line (after excluding prefixes and tokens such as "Re:", "Fw:", and other strings denoting that a message is a reply or forward of a previously received message) to one thread. Another method of grouping parent and child (i.e., reply and forward) email messages together in a thread is to determine whether messages are linked through an In-Reply-To or similar reference value in the message header referencing another message ID, since the message ID would identify at least the immediately previous message in the message thread. Each message of the thread could then be identified by locating the messages having the referenced message IDs. Still another method of grouping find all messages sharing a common thread identifier value, which may be included in the message header. A thread identifier value may be included in the message as received by the device 200, or may alternatively be assigned by the device 200 after receipt.

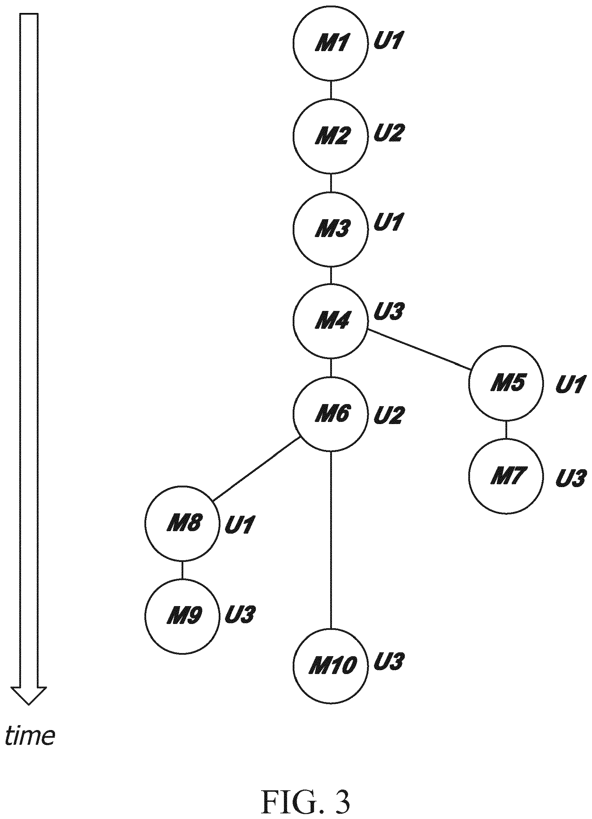

Given the widespread use and heavy reliance on electronic communication and wireless mobile communication devices today, the volume of messages that a user of a device 200 receives in the course of a day can be significant. A high volume of messages can result from participation in active "conversations" or message threads involving a number of participants. In an active thread, a number of related messages belonging to the thread may be received while a participant is still composing a reply to an earlier message in the thread; the participant may not have time to react to the newly received messages before sending their own reply, and thus may inadvertently send a redundant response to the other thread participants. This can result in a "forking" of the message thread, which is illustrated schematically in FIG. 3.

FIG. 3 illustrates a pattern of communication among three participants in an email message thread illustrating forking, or a lack of coherence in the thread. Initially, messages M1-M4 are sent and received among the group of users U1, U2, U3 serially: that parent message M1 (sent by user U1) has only one reply or child message, M2 (sent by user U2); message M2 has only one child message M3 (sent by user U1); and message M3 has only one child message M4 (sent by user U3). This series of messages represents a relatively "slow" pace in a message thread, where only one participant sends a reply to a given message in the thread.

While messages can be distributed among users relatively quickly over modern networks, and received within seconds of transmission so as to be effectively "real-time", users do not always read and react to received messages as promptly as they are delivered. As a result, it is possible that multiple users may respond to a parent message in a thread without realizing that others are in the process of responding to the parent message as well. In the example of FIG. 3, messages M5 and M6 are children of message M4; users U1 and U2 each composed and transmitted a message in reply to message M4 at approximately the same time. The result is a "fork", because there are now two messages in the thread, M5 and M6, that have not yet received a reply message. Participants in the thread may choose to reply to these messages instead, resulting in additional series of child messages M7, M8-M9, and M10. Of course, it will be appreciated that in electronic communication such as email, any message in the thread, from M1 onwards, may be made the parent of a subsequent child message; for example, even after message M10 is added to the thread, a participant may choose to respond to message M2. The more participants involved in a message thread, the greater the potential number of messages. This can result in increased consumption of networking and computing resources (bandwidth, processor time, and/or battery life, for example) as the participants' respective communication devices transmit, receive and process incoming messages. In addition, the lack of coordination between participants in responding to messages can be disruptive to the conversation flow between participants, as some participants may contribute similar content in their respective responses in the thread.

The problems of non-real-time message flow may be mitigated to some degree by detecting incoming messages belonging to a given message thread are they are received by a user's communication device, and alerting the user when the message is received, particularly if the user is currently viewing another message in the thread, or composing a child message to an earlier message in the thread. Notifying the user at the time he or she is engaged in composing a child message affords the user the opportunity to refrain from transmitting the child message until the incoming message(s) have been read. However, this requires the user to discard the drafted child message, or else save the child message as a draft in a data store. The former results in wasted time and computing resources. The latter conserves the user's effort in draft message form; but if the user wishes to make use of that draft to respond to a later-received message in the message thread, the user must locate the draft message data store, and the desired draft message in the data store; open the draft message, and select and copy the content of the draft message to a "clipboard" portion of memory of the user device; close the draft message; locate the later-received message and initiate composition of a new child message for the later-received message; paste the copied content into the new child message composition interface; and continue editing the new child message as desired. This process consumes additional time and computing resources to implement. In addition, this process also presumes that the draft message content copied from the first child message is retained in memory long enough to be pasted to the new child message. Since content copied in this manner is typically retained in volatile RAM, there is a risk that the copied content may be lost due to a power failure at the user device before it can be added to the new child message. Furthermore, since there is also a risk that the copied draft message content may be inadvertently overwritten by other copied content before it can be added to the new child message, since the "clipboard" memory available from typical user device operating systems is often limited to a single entry.

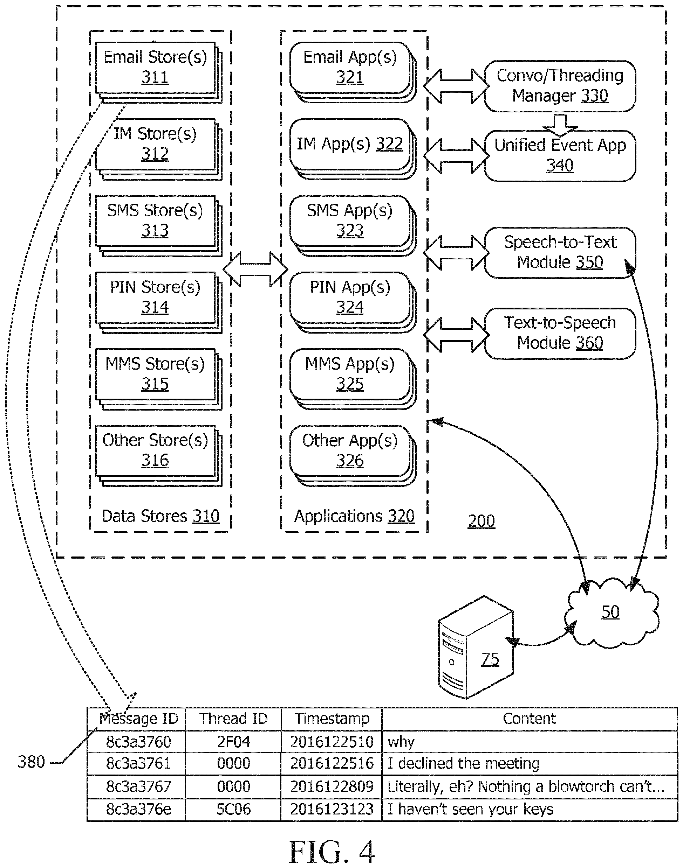

Accordingly, an improved method and system are provided for managing draft content and message composition in a message thread. FIG. 4 illustrates select components on a user device such as the device 200 to implementing the improved method and system. Data accessible to the user on the device 200 is provided in a number of data stores 310, which may be maintained in memory resident in the device 200 itself, typically in persistent memory. As can be seen in FIG. 4, the data stores 310 include stores for each type of message or notification serviced on the device 100; thus, there may be one or more of an email store 311, IM store 312, SMS store 313, PIN store 314, MMS store 315, and other stores 316. The stores 310 may be associated with a dedicated messaging or notification application or function executing on the device, and/or with a particular message format. Since a device 200 may be provisioned with multiple user accounts for similar message formats, each provisioned account may be allocated its own distinct data store; therefore, there may be multiple email data stores 311, multiple IM stores 312, and so on. In particular, the data stores for a given messaging application can include a data store that stores draft message data, as referenced below. An example of such a draft message data store 380 for an email messaging application 321 includes, for each message, an optional message ID (in some implementations, the message ID may not be assigned until the message is prepared for transmission, or received by a message server); a thread identifier that is computed at the device 200; optionally a timestamp indicating the date and time the draft message was stored in the data store 380; and draft message content. Additional data may be stored in the draft store, such as identifiers for recipients of the draft message, not shown. This information can be maintained in a single table or data structure, or in multiple data structures making up the data store 380. The messaging data stores 310 maintained at the device 200 may represent only a portion of the complete message data associated with a given format or account. Complete data stores may be maintained at a remote location, such as a message server system available over a wireless network connection.

Typically, each data store 310 is under the control of and is accessed by a corresponding or dedicated application 320. FIG. 4 illustrates that there is an application 320 corresponding to each of the data stores 310; thus, there are one or more email applications 321, IM applications 322; SMS applications 323, PIN applications 324, MMS applications 325, and other applications 326. When a new communication event (e.g., a message) is obtained by the electronic device 300 or a change to an existing communication event is detected (e.g., a new message is received or sent, or an update to a previous message is received), the appropriate application 320 is notified, if the application 320 itself was not the source of the new or changed communication event. The application 320 can then store the new or changed communication event in its corresponding data store 310. In some implementations, the device 200 may include a distinct conversation or threading module 330 that correlates messages in one or more data stores 310 with other messages to sort or categorize the messages into common threads or conversations, or a unified event application 340 that collates communication events from different data stores 310 and presents them in a single user interface. The functionality of these modules or applications 330 and 340 may alternatively be incorporated into a messaging application 320. The messaging applications 320 may also require services from other applications executing on the device, or services supplied remotely over a network connection. For example, when the device 200 is a touchscreen device, the OS 240 may include a virtual keyboard module that can be invoked by any application requiring text or character data entry. Another example of a service is a speech-to-text module 350, which may be invoked by a messaging application 320. Rather than type a message, the user can speak and have his or her speech detected by the microphone 224; the module 350 converts the speech to text and provides this text to the application 320. Conversion may be supported by remote services 75 accessible over a network 50. Input speech may be transmitted to the service 75, where it is converted to text; the text is sent by the service 75 back to the device 200. The device 200 can include a text-to-speech module 360 as well, for rendering messages and information from the messaging applications aurally (i.e., over a speaker) rather than visually in a display screen.

As mentioned above, participation in electronic communications can result in a complicated message "conversation" or thread, particularly when more than two participants are contributing to a message thread. If participants in a message thread respond to the same messages, or substantially repeat content in their respective contributions to the message thread, the content of the thread may become confusing and repetitive. Lacking the usual conversational cues of in-person communication, a conversation taking place over electronic messages such as in an email thread can take longer than an in-person conversation, and require more messages in the conversation that might have been necessary for in-person communication. Conversations taking place over email are not necessarily immediate; messages are stored and forwarded over a network to recipients, and a given message may be stored, unread, for unpredictable periods of time before the recipients even read the message. One recipient may read and respond to a received message immediately, while other recipients may delay in reading and/or responding to the message. Thus, messages in a thread may continue to flow in from other participants while a user composes a reply message to an earlier parent message in the thread.

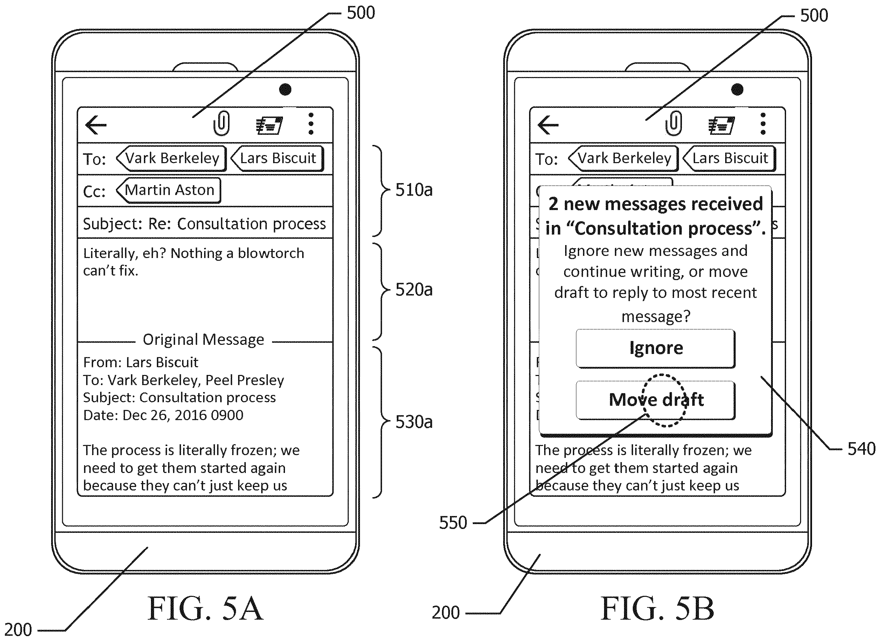

FIGS. 5A to 5D illustrate a first example embodiment in which composed message content is retained for use in subsequently generated child messages, which can mitigate the volume of messages sent and received in a message thread. In the discussion herein and in the accompanying figures, the various embodiments are described in the context of email message threads. Email is illustrated in these examples due to its widespread use in electronic communications; however, it should be appreciated by those skilled in the art that the contemplated embodiments may be implemented, with suitable modification, to other types of electronic messages and message formats. FIG. 5A illustrates a message composition user interface 500. This user interface 500 may be an example interface in an email messaging application 321, executing on a user communication device 200. The message composition user interface 500 in this example includes a header field interface 510a, where the user may input or edit header information for the message, such as the designated recipients of the message, and optionally a subject line for the message; a message body content interface 520a, where the user may input and edit message body content for the message being composed. In this example, the message being composed using the message composition user interface 500 is a child message for an existing parent message previously received in a thread. Conventionally, when an instruction to compose a reply or forward ("child") email message is received by an email messaging application, the application may automatically generate header and/or message body content data for the child message based on the parent message header and content data, as is understood by those skilled in the art. The message body content data for the child message, in particular, can include reproduced header and/or message body content data from the parent message.

Thus, in FIG. 5A, the message composition user interface 500 includes an optional quoted message interface 530a, in which message body content and/or header data from a parent message is reproduced. In some email messaging application implementations, the reproduced data from the parent message may be editable by the user; thus, the interface 530a is included in the message body content interface 520a, and the reproduced parent message data forms part of the message body content of the child message being composed. In other implementations, the parent message data is automatically appended to the message body content of an outgoing child message transmitted from the user device 200 or is appended to the outgoing child message as an attachment; thus if parent message data is displayed in the interface 530a it may be for the user's reference only, and may not be editable.

The message composition user interface 500 is displayed while the email messaging application 321 is in a message composition mode and able to receive input message content from the user. The user may use any suitable input device or system, such as a keyboard 220, or microphone 224 and speech-to-text module 350, to enter message content via the message composition user interface 500. While in the message composition mode, the user device 200 may receive one or more further messages. These messages can include messages that are related to the parent message, i.e., belonging to the same message thread as the parent message). In this example, operation of the user device 200 results in determination that the received message or messages include at least one message that belongs to the same thread as the parent message of the child message currently being composed. This determination may be carried out by the email messaging application 321, or by a separate conversation or threading manager 330, as described above. When it is determined that one or more messages belonging to the same thread have been received, an indication is presented to the user to bring the receipt of the related messages to the user's attention. FIG. 5B illustrates an example indication, which in this case is an overlay dialog box 540 displayed in the message composition user interface 500. This example dialog box 540 presents options to the user to either continue composing the current child message (i.e., "ignore" the newly received messages); or else to move the draft message content composed for the child message to a new child message based on one of the more recently received messages (i.e., "move draft"). In this example user interface 500, which is depicted on a touchscreen device 200, selection of the latter option is indicated by contact area 550, which represents (as an example) a touch event on the "move draft" option of the dialog box 540. As those skilled in the art will appreciate, the dialog box 540 is but one example of a possible indication that can be presented to the user. Indications may be presented visually or aurally or by other means, using any suitable output component of the device 200, and the user may select options or issue commands to the device 200 using any suitable input component.

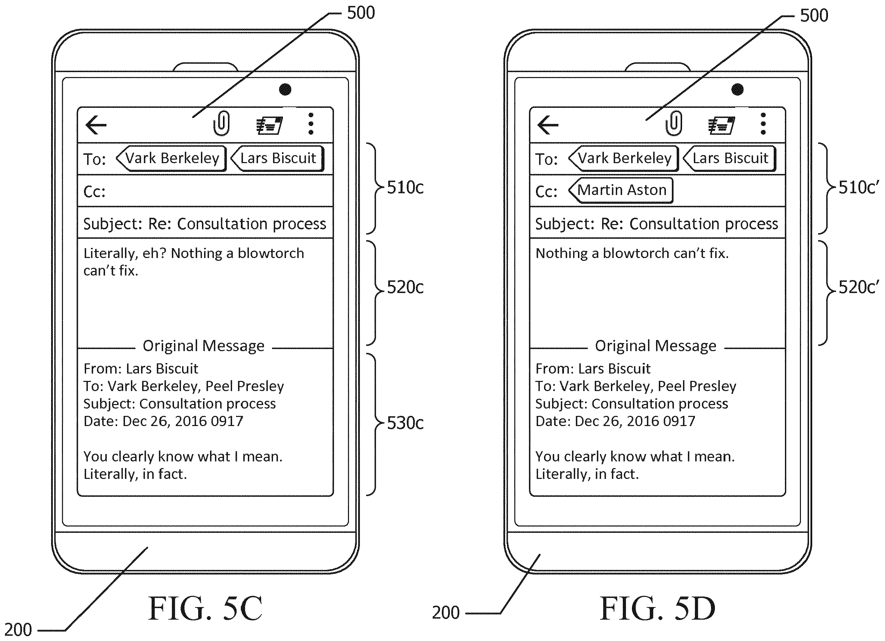

In response to selection of the "move draft" option, the email messaging application 321 continues operating in the message composition mode and presents a new message composition user interface 500 for a new child message. The email messaging application 321 also extracts the data input by the user for the child message body, as discussed in further detail below, and stores the extracted data at least temporarily; and identifies a new parent message for the new child message (e.g., the most recently received new messages). The email messaging application 321 then displays a new message composition user interface 500 for a new child message, as shown in FIG. 5C. This new interface 500 resembles the previously displayed message composition user interface of FIG. 5A, with a header field interface 510c in place of interface 510a; message body content interface 520c in place of interface 520a; and optional quoted message interface 530c in place of interface 530a. However, certain input data in each of these interfaces may be different. In the example of FIG. 5C, the message composition user interface 500 automatically updates the header data in the header field interface 510c to contain recipient data obtained from the newly-identified parent message, which may be different than the recipient data in the first child message; updates the message body content interface 520c to insert the extracted data from the first child message body; and updates the reproduced message data in interface 530c to contain message data from the newly-identified parent message. The user may then initiate transmission of the new child message as automatically generated by the email messaging application 321 (e.g., by invoking a "send" command, as known in the art), or else optionally edit the data that was automatically generated. FIG. 5D illustrates the message composition user interface 500 after the user has edited the data in the header fields in interface 510c' and the message body content in interface 520c'. The user can then initiate transmission of the edited child message. Typically, once transmission of the child message has been initiated, the email messaging application 321 exits the message composition mode and returns to another mode, such as message viewing mode in which one or more messages are displayed for perusal by the user.

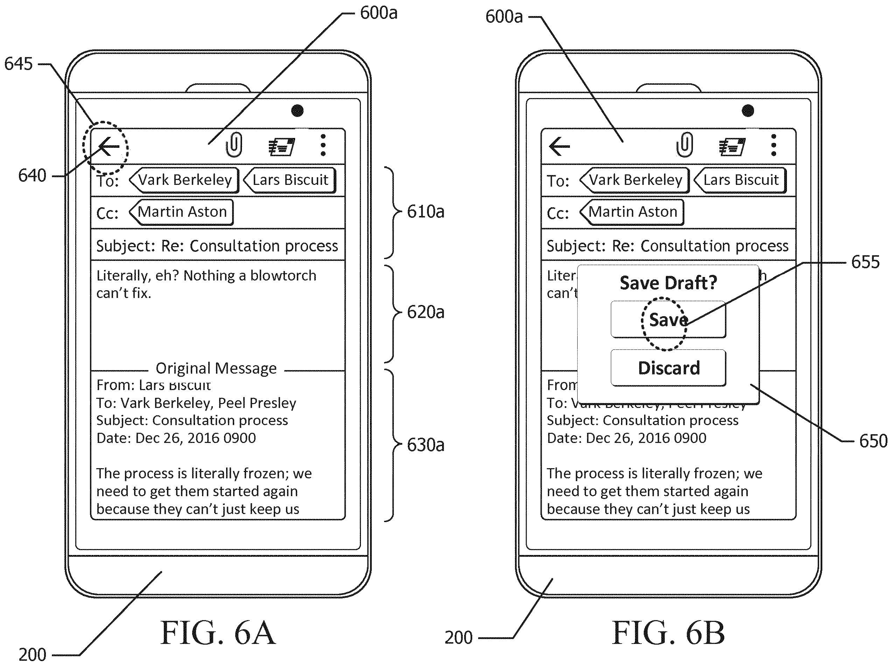

The foregoing example demonstrates the handling of message composition in a message thread when a related message is newly received during message composition. However, even if a related message is not received during message composition, the user may elect to defer sending a child message composed at the user device for other reasons, and may instead choose to save the child message as a draft for later editing and/or transmission, and exit the message composition mode of the email messaging application 321. In this scenario, if any messages belonging to the same thread arrive at the device 200 after exiting the message composition mode, the notification 540 of FIG. 5B may not be presented to the user, as the user may not be in the message composition mode, and is not composing a child message in the same thread at the time the messages are received. Accordingly, FIGS. 6A-6H illustrate an example implementation in which child message content is stored in a manner such that it is easily retrievable once the email messaging application 321 re-enters the message composition mode.

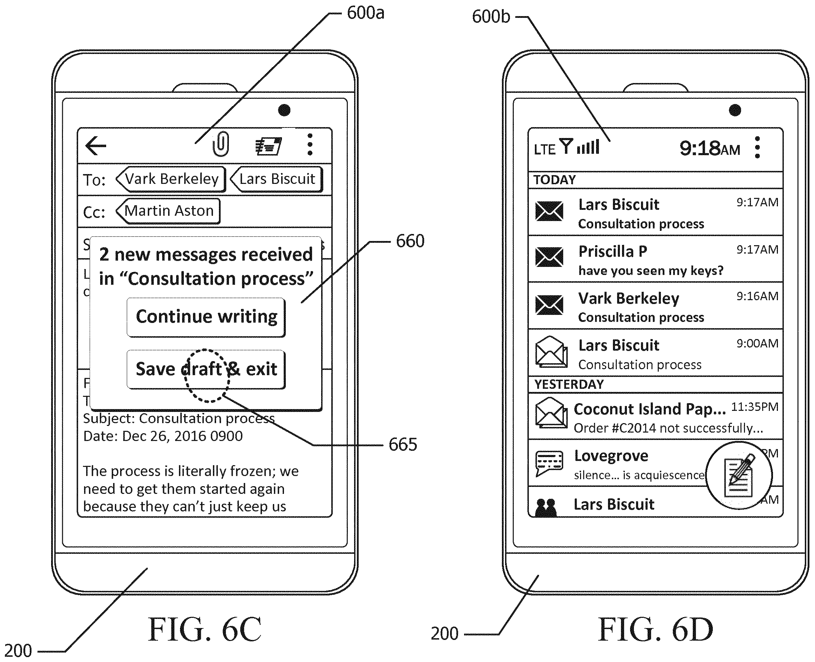

FIG. 6A illustrates a first message composition user interface 600a that can be displayed while the email messaging application 321 is in the message composition mode. This message composition user interface 600a is similar to the initial interface 500 illustrated in FIG. 5A, and illustrates a header field interface 610a with input message header data, a message body interface 620a with input child message body content, and a quoted message interface 630a containing reproduced data from a first parent message in the message thread. In this example, however, the user of the device 200 may chose to exit the message composition mode without invoking a "send" command and sending the child message from the device 200. The message composition mode may be exited, for example, by invoking an "exit" command, which in FIG. 6A is represented by the backwards arrow icon 640 and the contact area 645 indicating a touch event. In response to the "exit" command, the email messaging application 321 may present an option to the user to save the message that had been composed. FIG. 6B illustrates an example overlay dialog box 650 presenting an option to either "save" the composed message as a draft, or "discard" the composed message; the "save" option is selected, as indicated by contact area 655. Alternatively, the option to save the composed message may be invoked by actuating a "save draft" command without invoking an "exit" command. As still a further alternative, in the event a related message is received while the child message in FIG. 6A is being composed, a notification may be displayed to the user as in the example of FIG. 5B; however, as shown in FIG. 6C, the notification 660 may present the user with the option of either ignoring the newly received messages and continuing to compose the current child message ("continue writing"), or to save the current child message as a draft message and exit the message composition mode ("save draft & exit"). This example may be combined with the implementation illustrated in FIG. 5B, and provide the user with an option to immediately move the draft to a new child message as described above. However, in the example of FIG. 6C the draft message is saved, and the message composition mode exited, in response to selection of the latter option, as indicated by contact area 665. In response to any of these exit and/or save commands, input content of the child message body is saved in association with the message thread, and stored for later retrieval as discussed in further detail below.

Subsequent to exiting the message composition mode and the message composition user interface 600a, the device 200 and the email messaging application 321 may execute in other modes. For example, the user may exit the messaging application 321, and launch and operate other applications on the device 200; or the user may invoke a message viewing or presentation mode of the messaging application 321. FIG. 6D represents an example of operation of the user device 200 in a mode other than the message composition mode. In this example, the email messaging application 321 is executing in a message presentation mode. The user interface 600b illustrated in FIG. 6D is a message listing or inbox, which presents a listing of received (and optionally sent) messages of at least one type. The user interface 600b can operate as a conventional message inbox, providing the user with entry points to access and view the individual messages listed in the inbox.

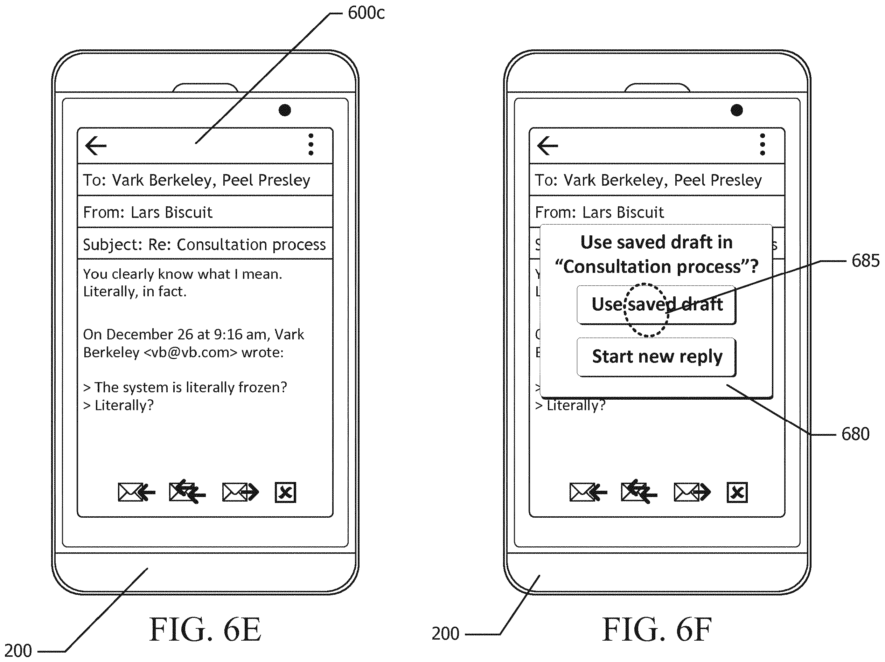

One or more messages belonging to the same thread as the first parent message may have been received by the device 200 subsequent to exiting the message composition mode as illustrated in FIGS. 6A-6C. The user may optionally choose to view one or more of these messages in the message presentation mode of the message application 321; FIG. 6E illustrates display of one of these example related messages in a message presentation interface 600c. The user may invoke a command to generate a new child message (e.g., a reply or forward message) based on this more recently received message, which is now designated a "parent message". In response to this command, the email messaging application 321 will return to the message composition mode and display a message composition user interface.

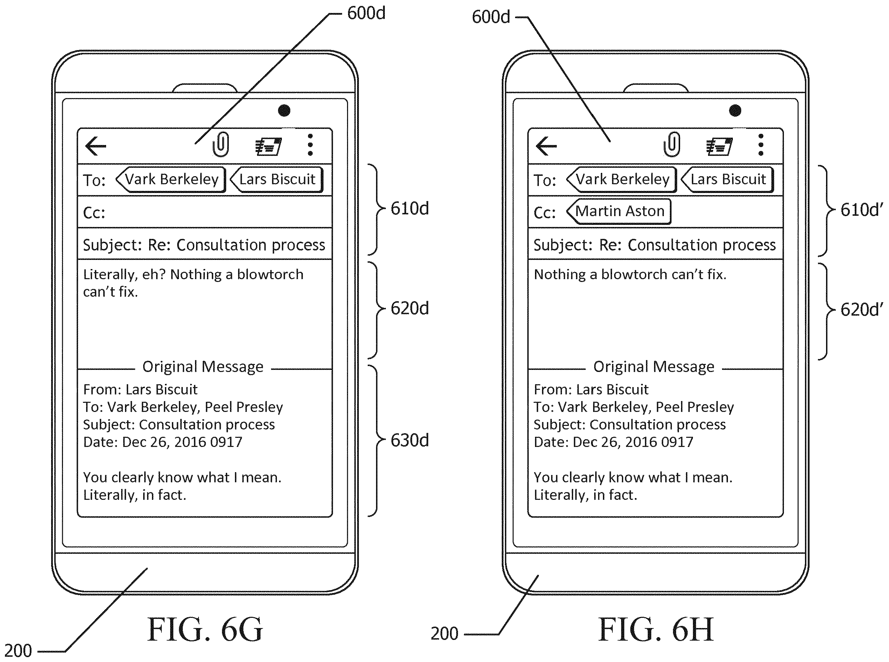

However, in this embodiment, before presenting the message composition user interface, the email messaging application 321 determines that the draft message data store 380 stores data for a draft child message corresponding to the same message thread as the parent message (in this example, the parent message is the message displayed in FIG. 6E). The determination can be based on correlating a thread identifier for the parent message with a thread identifier stored in association with the draft message content, or a similar identifier stored in association with the draft message content. On determining that a corresponding draft message for the thread exists, the user may be presented with the option to retrieve that draft content and use it in the new child message about to be composed. FIG. 6F illustrates an example overlay dialog box 680 presented in the message viewing interface providing the option to use the previously saved draft child message content ("use saved draft"), or to start a new reply child message without using the saved draft child message content ("start new reply"). In response to selection of the "used saved draft" option (as indicated by contact area 685), the saved draft child message content is retrieved and inserted in the message body field 620d of a new message composition user interface 600d, as shown in FIG. 6G. The new message composition user interface 600d otherwise includes data that would typically be automatically inserted upon generation of a new child message in reply to the selected parent message; for example, recipients indicated in the header field input interface 610d and the quoted message content shown in the interface 630d are obtained from the parent message. Upon generation of the new child message using the retrieved draft content, the user may elect to immediately transmit the new child message, or may opt to edit the message further, as shown in FIG. 6H, where edits to the recipients in field 610d' and message body content 620d' have been entered. The edited new child message can then be transmitted in reply to the thread.

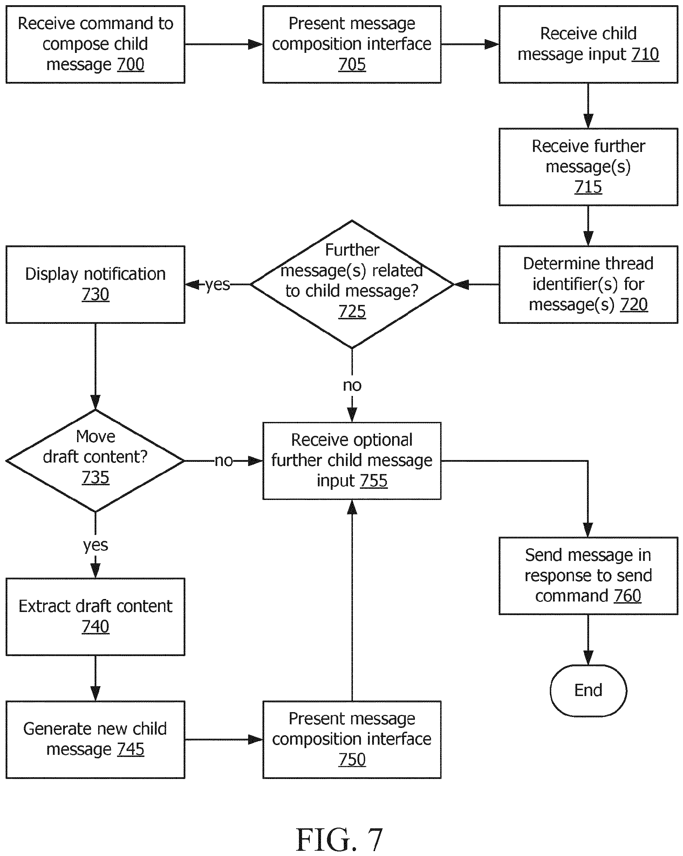

FIGS. 7 to 10 illustrate the process that may be executed on the device 200 in further detail, where FIG. 7 reflects the process illustrated in FIGS. 5A-5D and FIGS. 8 and 10 reflect the process of FIGS. 6A-6H. Turning first to FIG. 7, at 700, a command is received by the email messaging application 321 to compose a child message (e.g., a reply or forward) for a selected parent message in a message thread. The parent message, at this point, may be the only (e.g., the first) message in the thread available at the device 200. At 705, the email messaging application 321 enters a message composition mode presents a message composition interface for receiving user input. The user input for the child message is received at 710. This input can include selection or deletion of one or more recipients (if the child message is a reply, one or more recipients may have been automatically populated in a header field interface in the message composition user interface), as well as input of message body content. In the meantime, while the application 321 is in the message composition mode, one or more further messages are received at the device 200. One or more of these messages may be related to the thread of the child and parent message; other messages received during this period may not belong to the thread. At 720, the device 200 determines thread identifiers for the newly received messages, and at 725 determines whether the messages are related to the child message. This may be determined by comparing the thread identifiers obtained for the newly received messages against a thread identifier for the parent message. If the newly received messages are not related to the parent/child messages, then message composition may continue at 755, with the email messaging application 321 receiving additional child message input, if any; then the child message is sent at 760 in response to a send command.

If, on the other hand, one or more of the newly received messages are related to the parent/child message by the thread identifier, a notification can be presented at 730 to inform the user of the receipt of the new related messages. This notification can include an option for the user to select to move the draft content of the child message under composition to a new child message in response to a newly-received message in the thread. If this option is selected, then at 740 the draft message body content of the child message is extracted, as described below, and a new child message is generated using the extracted draft message body content at 745. As described above, this new child message can include the message body content of the previous child message, but designated recipients based on the newly-selected parent message, which in this case is one of the newly-received messages. A new message composition user interface is presented at 750 with the new child message content. Optionally, further child message input is received at 755, and the new child message is sent in response to a send command at 760. If the user does not chose to move the draft content at 735, then the process continues to 755 and 760 with the original child message.

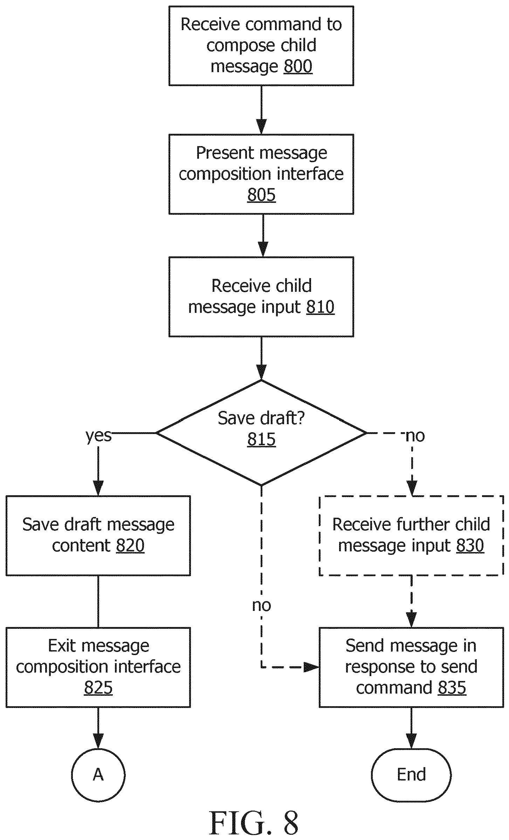

FIG. 8 depicts a first portion of the process illustrated by FIGS. 6A-6H. At 800, a command is received by the email messaging application 321 to compose a child message (e.g., a reply or forward) for a selected parent message in a message thread. Again, the parent message, at this point, may be the only message in the thread available at the device 200. At 805, the email messaging application 321 enters a message composition mode presents a message composition interface for receiving user input. The user input for the child message is received at 810. Again, this input can include selection or deletion of one or more recipients, as well as input of message body content. At 815, the user is presented with an option to save the child message as a draft without sending the message; this may occur as a result of detection of newly received messages related to the same thread as the parent/child as described above, but may alternatively occur as a result of the user's own choice, irrespective of whether any further messages had been received at the device 200 in the meantime. If the user chooses not to save the message as a draft, composition of the child message may optionally continue (as indicated by the phantom lines) with further input at 830; then the message may be sent in response to a send command at 835. If the user chooses to save the message as a draft, the draft message content is stored at 820 in association with metadata such as that described in relation to FIG. 4, including a thread identifier or other value that can be used to identify the draft content as belonging to a given message thread. The message composition interface and message composition mode of the application 321 can then be exited at 825.

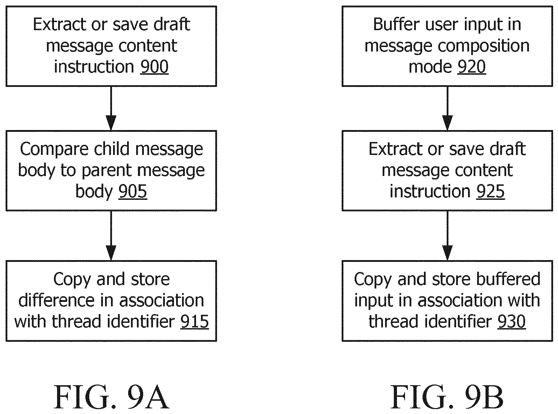

As mentioned above, draft message body content is either extracted or saved from the first child message composed in the application 321. Rather than save the entire draft message, including any quoted message text from the parent message, only the additional message content forming the new child message content is extracted and stored. FIGS. 9A and 9B illustrate two possible methods for obtaining this data for storage in the draft message data store 380. In FIG. 9A, in response to receipt of a command at 900 to save draft content from a child message currently being composed in the message composition mode, the email messaging application 321 compares the child message body content with the message body content of the parent message at 905. Any difference between the child message body content and the parent message body content is selected. The difference may be identified as a string of characters or other data (e.g., embedded images or other information) that occurs in the child message body content that does not appear in the parent message body content, as any data occurring in the child message body content before any quoted parent message content. This difference is copied and stored in the data store 380 in association with a thread identifier obtained for the parent message at 915. Alternatively, as set out in FIG. 9B, the child message body content may be obtained as that content is input by the user. The characters or other instructions input by the user may be stored in a memory buffer as it is received from the user input device at 920; then, in response to a command to save the draft message body content received at 925, the buffered data is copied and stored in the data store 380 in association with the thread identifier obtained for the parent message at 930. The thread identifier may be obtained for the parent message in response to the command to save the draft message body content, or may be determined earlier, when the parent message is initially received and processed by the device 200.

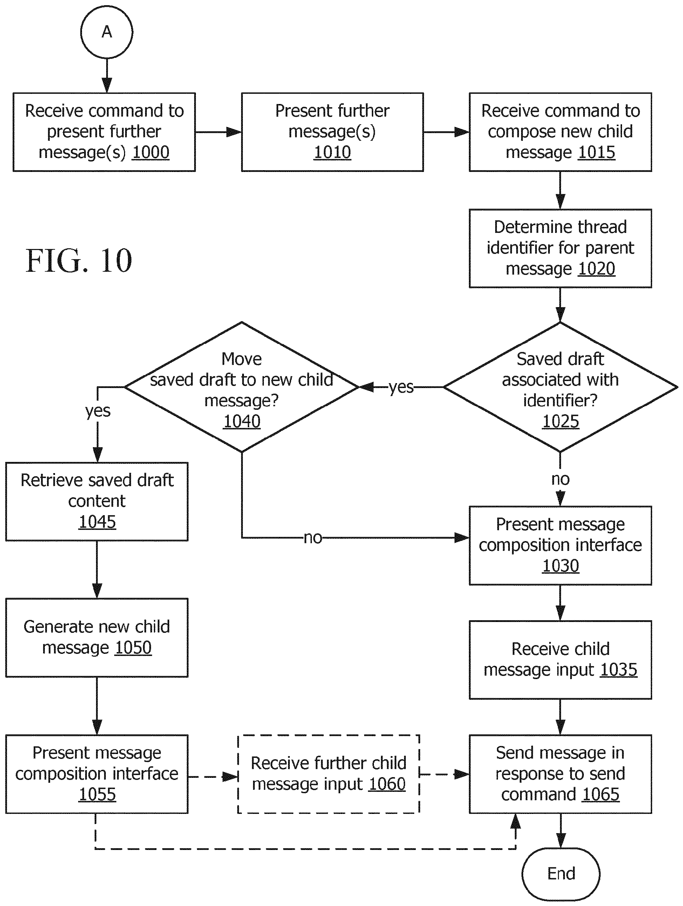

At a later point in time, the process of FIG. 8 continues, as shown in FIG. 10. Further messages may have been received by the device 200 in the meantime, and a command received at 1000 to present these further messages for review by the user. Thus, the messaging application 321 may enter a message presentation mode and present the messages for viewing at 1010. Subsequently, the user may invoke a command to generate a new child message for one of the further messages at 1015. In response to this command, the application 321 determines a thread identifier for the selected parent message at 1020, and can then query the data store 380 to determine, at 1025, whether any saved draft message content is associated with the same identifier. If there is no saved draft message content associated with the identifier, then at 1030 the application 321 enters the message composition mode and presents a message composition user interface, receives new child message input at 1035, and ultimately sends the new child message in response to a send command at 1065. If, however, there is saved draft message content in the data store 380 corresponding to the thread identifier, at 1040 the user is presented with an option to use the saved draft message content in the new child message. If this option is not selected, then the process moves to 1030 as described above. If the option to use the draft message content is selected, then at 1045 the application 321 retrieves the draft content from the data store 380 and generates a new child message using this content at 1050, as described above. The message composition user interface is then presented at 1055, using the new child message generated at 1050. The user may optionally edit the generated child message at 1060 (as indicated by the phantom lines), or else immediately initiate transmission of the child message at 1065. It will be appreciated that by saving the draft message content from the previous child message in association with a thread identifier, the draft message content can be identified easily and used in during composition of a child message at a much later point in the message thread.

The examples and embodiments are presented only by way of example and are not meant to limit the scope of the subject matter described herein. Variations of these examples and embodiments will be apparent to those in the art, and are considered to be within the scope of the subject matter described herein. For example, some steps or acts in a process or method may be reordered or omitted, and features and aspects described in respect of one embodiment may be incorporated into other described embodiments. The examples above were illustrated in an implementation employing a graphical user interface and touchscreen-based user input. However, those skilled in the art will appreciate that the systems and methods described above can also be implemented using other forms of user interfaces, such as audible interfaces employing aural presentation of data to the user, and receipt of voice-based commands from the user.

The data employed by the systems, devices, and methods described herein may be stored in one or more data stores. The data stores can be of many different types of storage devices and programming constructs, such as RAM, ROM, flash memory, programming data structures, programming variables, and so forth. Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by one or more processors to perform the operations described herein. The media on which the code may be provided is generally considered to be non-transitory or physical.

Computer components, software modules, engines, functions, and data structures may be connected directly or indirectly to each other in order to allow the flow of data needed for their operations. Various functional units have been expressly or implicitly described as modules, engines, or similar terminology, in order to more particularly emphasize their independent implementation and operation. Such units may be implemented in a unit of code, a subroutine unit, object (as in an object-oriented paradigm), applet, script or other form of code. Such functional units may also be implemented in hardware circuits comprising custom VLSI circuits or gate arrays; field-programmable gate arrays; programmable array logic; programmable logic devices; commercially available logic chips, transistors, and other such components. Functional units need not be physically located together, but may reside in different locations, such as over several electronic devices or memory devices, capable of being logically joined for execution. Functional units may also be implemented as combinations of software and hardware, such as a processor operating on a set of operational data or instructions.

It should also be understood that steps and the order of the steps in the processes and methods described herein may be altered, modified and/or augmented and still achieve the desired outcome. Throughout the specification, terms such as "may" and "can" are used interchangeably. Use of any particular term should not be construed as limiting the scope or requiring experimentation to implement the claimed subject matter or embodiments described herein. Any suggestion of substitutability of the electronic device for other implementation means should not be construed as an admission that the invention(s) described herein are abstract, or that the electronic device or its components are non-essential to the invention(s) described herein. Further, while this disclosure may have articulated specific technical problems that are addressed by the invention(s), the disclosure is not intended to be limiting in this regard; the person of ordinary skill in the art will readily recognize other technical problems addressed by the invention(s).

A portion of the disclosure of this patent document contains material which is or may be subject to one or more of copyright, design, or trade dress protection, whether registered or unregistered. The rightsholder has no objection to the reproduction of any such material as portrayed herein through facsimile reproduction of this disclosure as it appears in the Patent and Trademark Office records, but otherwise reserves all rights whatsoever.

## Claims

1. A method implemented by at least one processor (202) at a communication device (200), the method comprising
receiving (810) input, in a message composition user interface from a user input device, for a child message of a parent message in a message thread;
without sending the child message, storing (820) the received input in association with the message thread in a memory (206, 208) of the communication device (200);
exiting (825) the message composition user interface;
receiving (700; 1015) a command to generate a new child message for a further message related to the parent message using the at least one user input device
determining (725; 1020, 1025) that the further message related to the parent message belongs to the message thread;
presenting (750; 1055) in the message composition user interface for the new child message, message body content for the new child message including the stored input (820) retrieved from the memory (206, 208); and
transmitting (760; 1065) the new child message to at least one recipient,
wherein the child message comprises a reply to or a forward of the parent message in the message thread, and storing (820) the received input in association with the message thread in the memory (206, 208) comprises:
determining (900, 905) a difference between message body content of the child message and message body content of the parent message;
storing (915) the difference in a draft message data store (380); and
associating (915) an identifier for the message thread with the difference in the draft message data store (380).

2. The method of claim 1, further comprising:
after determining that the further message related to the parent message belongs to the message thread p
resenting (1040) an option to move the stored input (820) to the new child message, wherein
presenting the message composition user interface for the new child message occurs after receiving a command to move (735) the stored input (820) to the new child message

3. The method of claim 1 or claim 2, further comprising receiving (715) the further message related to the parent message
during receipt (710) of the input from the user input device for the child message, and presenting an indication in the message composition user interface that the further message related to the parent message
was received before exiting the message composition user interface.

4. The method of any preceding claim, further comprising, after storing the input and exiting the message composition user interface and before receiving the command to generate the new child message:
receiving (715) a plurality of messages including the further message, message related to the parent message, at least one of the plurality of messages belonging to a different message thread; and
presenting (1010) each of the plurality of messages in a message presentation user interface.

5. The method of claim 4, wherein presenting each of the plurality of messages in the message presentation user interface comprises presenting message body content of each of the plurality of messages.

6. The method of any preceding claim, wherein storing the input in association with the message thread occurs in response to a save command.

7. Non-transitory computer-readable media storing code which, when executed by one or more processors (202) of a communication device (200), cause the device to implement all the steps of the method of any preceding claim.

8. A communication device (200) comprising:
memory (206, 208);
at least one user input device (214, 220);
a communications subsystem (216a-216n); and
at least one processor (202) in operative communication with the memory (206, 208), the at least one user input device (214, 220), and the communications subsystem (216a-216n), the at least one processor (202) being configured to:
receive (810), using the at least one user input device, input in a message composition user interface for a child message of a parent message in a message thread;
without sending the child message, store (820) the received input in association with the message thread in the memory (206, 208);
exit (825) the message composition user interface;
receive (700; 1015) a command to generate a new child message for a further message related to the parent message using the at least one user input device
determine (725; 1020, 1025) that the further message related to the parent message belongs to the message thread;
present (750; 1055) in the message composition user interface for the new child message, message body content for the new child message including the stored inpu (820) retrieved from the memory; and
transmit (760; 1065) the new child message to at least one recipient using the communications subsystem,
wherein the child message comprises a reply to or a forward of the parent message in the message thread, and storing (820) the received input in association with the message thread in the memory (206, 208) comprises:
determining (900, 905) a difference between message body content of the child message and message body content of the parent message;
storing (915) the difference in a draft message data store (380); and
associating (915) an identifier for the message thread with the difference in the draft message data store (380).

9. The communication device of claim 8, wherein the at least one processor (202) is further configured to, after storing (820) the input and exiting (825) the message composition user interface and before receiving (700; 1015) the command to generate the new child message:
receive (715), using the communications subsystem, a plurality of messages including the further message related to the parent message, at least one of the plurality of messages belonging to a different message thread; and
present (1010) each of the plurality of messages in a message presentation user interface.

10. The communication device of claim 9, wherein presenting each of the plurality of messages in the message presentation user interface comprises presenting message body content of each of the plurality of messages.

11. The communication device of any of claims 8 to 10, wherein storing the input in association with the message thread occurs in response to a save command.

## Patentansprüche

1. Verfahren, das von mindestens einem Prozessor (202) an einer Kommunikationsvorrichtung (200) implementiert wird, wobei das Verfahren Folgendes umfasst:
Empfangen (810) einer Eingabe für eine untergeordnete Nachricht einer übergeordneten Nachricht in einem Nachrichtenthread auf einer Nachrichtenverfassungsbenutzerschnittstelle von einer Benutzereingabevorrichtung;
Speichern (820) der empfangenen Eingabe in Verbindung mit dem Nachrichtenthread in einem Speicher (206, 208) der Kommunikationsvorrichtung (200), ohne die untergeordnete Nachricht zu senden;
Verlassen (825) der Nachrichtenverfassungsbenutzerschnittstelle;
Empfangen (700; 1015) eines Befehls zum Erzeugen einer neuen untergeordneten Nachricht für eine weitere Nachricht, die auf die übergeordnete Nachricht bezogen ist, unter Verwendung der mindestens einen Benutzereingabevorrichtung;
Bestimmen (725; 1020, 1025), dass die weitere Nachricht, die auf die übergeordnete Nachricht bezogen ist, zum Nachrichtenthread gehört;
Präsentieren (750; 1055) eines Nachrichtentextinhalts für die neue untergeordnete Nachricht, der die gespeicherte Eingabe (820) beinhaltet, die aus dem Speicher (206, 208) abgerufen wurde, auf der Nachrichtenverfassungsbenutzerschnittstelle für die neue untergeordnete Nachricht; und
Übertragen (760; 1065) der neuen untergeordneten Nachricht zu mindestens einem Empfänger,
wobei die untergeordnete Nachricht eine Antwort an oder eine Weiterleitung der übergeordneten Nachricht im Nachrichtenthread umfasst und das Speichern (820) der empfangenen Eingabe in Verbindung mit dem Nachrichtenthread im Speicher (206, 208) Folgendes umfasst:
Bestimmen (900, 905) eines Unterschieds zwischen einem Nachrichtentextinhalt der untergeordneten Nachricht und einem Nachrichtentextinhalt der übergeordneten Nachricht;
Speichern (915) des Unterschieds in einem Nachrichtenentwurfsdatenspeicher (380); und
Verknüpfen (915) einer Kennung für den Nachrichtenthread mit dem Unterschied im Nachrichtenentwurfsdatenspeicher (380).

2. Verfahren nach Anspruch 1, das ferner Folgendes umfasst:
nach dem Bestimmen, dass die weitere Nachricht, die auf die übergeordnete Nachricht bezogen ist, zum Nachrichtenthread gehört, Präsentieren (1040) einer Option zum Bewegen der gespeicherten Eingabe (820) zur neuen untergeordneten Nachricht, wobei
das Präsentieren der Nachrichtenverfassungsbenutzerschnittstelle für die neue untergeordnete Nachricht nach Empfangen eines Befehls zum Bewegen (735) der gespeicherten Eingabe (820) in der neuen untergeordneten Nachricht erfolgt.

3. Verfahren nach Anspruch 1 oder Anspruch 2, das ferner das Empfangen (715) der weiteren Nachricht, die auf die übergeordnete Nachricht bezogen ist, während des Empfangens (710) der Eingabe von der Benutzereingabevorrichtung für die untergeordnete Nachricht sowie das Präsentieren einer Anzeige in der Nachrichtenverfassungsbenutzerschnittstelle, dass die weitere Nachricht, die auf die übergeordnete Nachricht bezogen ist, vor Verlassen der Nachrichtenverfassungsbenutzerschnittstelle empfangen wurde, umfasst.

4. Verfahren nach einem der vorhergehenden Ansprüche, das ferner nach dem Speichern der Eingabe und dem Verlassen der Nachrichtenverfassungsbenutzerschnittstelle und vor dem Empfangen des Befehls zum Erzeugen der neuen untergeordneten Nachricht Folgendes umfasst:
Empfangen (715) einer Vielzahl von Nachrichten, die die weitere Nachricht Nachricht, die auf die übergeordnete Nachricht bezogen ist, beinhaltet, wobei mindestens eine der Vielzahl von Nachrichten zu einem anderen Nachrichtenthread gehört; und
Präsentieren (1010) jede der Vielzahl von Nachrichten auf einer Nachrichtenpräsentationsbenutzerschnittstelle.

5. Verfahren nach Anspruch 4, wobei das Präsentieren von jeder der Vielzahl von Nachrichten auf der Nachrichtenpräsentationsbenutzerschnittstelle das Präsentieren eines Nachrichtentextinhalts von jeder der Vielzahl von Nachrichten umfasst.

6. Verfahren nach einem der vorhergehenden Ansprüche, wobei das Speichern der Eingabe in Verbindung mit dem Nachrichtenthread in Reaktion auf einen Speicherbefehl erfolgt.

7. Nichttransitorischer computerlesbarer Medienspeichercode, der, wenn er von einem oder mehreren Prozessoren (202) einer Kommunikationsvorrichtung (200) ausgeführt wird, bewirkt, dass die Vorrichtung alle Schritte des Verfahrens nach einem der vorhergehenden Ansprüche implementiert.

8. Kommunikationsvorrichtung (200), die Folgendes umfasst:
Speicher (206, 208);
mindestens eine Benutzereingabevorrichtung (214, 220);
ein Kommunikationsuntersystem (216a-216n); und
mindestens einen Prozessor (202) der mit dem Speicher (206, 208), der mindestens einen Benutzereingabevorrichtung (214, 220) und dem Kommunikationsuntersystem (216a-216n) in Wirkkommunikation steht, wobei der mindestens eine Prozessor (202) zu Folgendem ausgelegt ist:
Empfangen (810) einer Eingabe auf einer Nachrichtenverfassungsbenutzerschnittstelle für eine untergeordnete Nachricht einer übergeordneten Nachricht in einem Nachrichtenthread unter Verwendung der mindestens einen Benutzereingabevorrichtung;
Speichern (820) der empfangenen Eingabe in Verbindung mit dem Nachrichtenthread im Speicher (206, 208), ohne die untergeordnete Nachricht zu senden;
Verlassen (825) der Nachrichtenverfassungsbenutzerschnittstelle;
Empfangen (700; 1015) eines Befehls zum Erzeugen einer neuen untergeordneten Nachricht für eine weitere Nachricht, die auf die übergeordnete Nachricht bezogen ist, unter Verwendung der mindestens einen Benutzereingabevorrichtung;
Bestimmen (725; 1020, 1025), dass die weitere Nachricht, die auf die übergeordnete Nachricht bezogen ist, zum Nachrichtenthread gehört;
Präsentieren (750; 1055) eines Nachrichtentextinhalts für die neue untergeordnete Nachricht, der die gespeicherte Eingabe (820) beinhaltet, die aus dem Speicher abgerufen wurde, auf der Nachrichtenverfassungsbenutzerschnittstelle für die neue untergeordnete Nachricht; und
Übertragen (760; 1065) der neuen untergeordneten Nachricht unter Verwendung des Kommunikationsuntersystems zu mindestens einem Empfänger,
wobei die untergeordnete Nachricht eine Antwort an oder eine Weiterleitung der übergeordneten Nachricht im Nachrichtenthread umfasst und das Speichern (820) der empfangenen Eingabe in Verbindung mit dem Nachrichtenthread im Speicher (206, 208) Folgendes umfasst:
Bestimmen (900, 905) eines Unterschieds zwischen einem Nachrichtentextinhalt der untergeordneten Nachricht und einem Nachrichtentextinhalt der übergeordneten Nachricht;
Speichern (915) des Unterschieds in einem Nachrichtenentwurfsdatenspeicher (380); und
Verknüpfen (915) einer Kennung für den Nachrichtenthread mit dem Unterschied im Nachrichtenentwurfsdatenspeicher (380).

9. Kommunikationsvorrichtung nach Anspruch 8, wobei der mindestens eine Prozessor (202) nach dem Speichern (820) der Eingabe und dem Verlassen (825) der Nachrichtenverfassungsbenutzerschnittstelle und vor dem Empfangen (700; 1015) des Befehls zum Erzeugen der neuen untergeordneten Nachricht ferner zu Folgendem ausgelegt ist:
Empfangen (715) einer Vielzahl von Nachrichten, die die weitere Nachricht, die auf die übergeordnete Nachricht bezogen ist, beinhaltet, unter Verwendung des Kommunikationsuntersystems, wobei mindestens eine der Vielzahl von Nachrichten zu einem anderen Nachrichtenthread gehört; und
Präsentieren (1010) jede der Vielzahl von Nachrichten auf einer Nachrichtenpräsentationsbenutzerschnittstelle.

10. Kommunikationsvorrichtung nach Anspruch 9, wobei das Präsentieren von jeder der Vielzahl von Nachrichten auf der Nachrichtenpräsentationsbenutzerschnittstelle das Präsentieren eines Nachrichtentextinhalts von jeder der Vielzahl von Nachrichten umfasst.

11. Kommunikationsvorrichtung nach einem der Ansprüche 8 bis 10, wobei das Speichern der Eingabe in Verbindung mit dem Nachrichtenthread in Reaktion auf einen Speicherbefehle erfolgt.

## Revendications

1. Procédé mis en œuvre par au moins un processeur (202) au niveau d'un dispositif de communication (200), le procédé comprenant les étapes consistant à :
recevoir (810) une entrée, dans une interface utilisateur de composition de message à partir d'un dispositif d'entrée utilisateur, pour un message enfant d'un message parent dans un fil de messages ;
sans envoyer le message enfant, stocker (820) l'entrée reçue en association avec le fil de messages dans une mémoire (206, 208) du dispositif de communication (200) ;
quitter (825) l'interface utilisateur de composition de message ;
recevoir (700 ; 1015) une commande pour générer un nouveau message enfant pour un autre message lié au message parent en utilisant le au moins un dispositif d'entrée utilisateur ;
déterminer (725 ; 1020, 1025) que l'autre message lié au message parent appartient au fil de messages ;
présenter (750 ; 1055) dans l'interface utilisateur de composition de message pour le nouveau message enfant, un contenu de corps de message pour le nouveau message enfant comportant l'entrée stockée (820) récupérée de la mémoire (206, 208) ; et
transmettre (760 ; 1065) le nouveau message enfant à au moins un destinataire,
dans lequel le message enfant comprend une réponse au message parent ou un transfert de celui-ci dans le fil de messages, et le stockage (820) de l'entrée reçue en association avec le fil de messages dans la mémoire (206, 208) comprend :
la détermination (900, 905) d'une différence entre un contenu de corps de message du message enfant et un contenu de corps de message du message parent ;
le stockage (915) de la différence dans un stockage de données de message brouillon (380) ; et
l'association (915) d'un identifiant pour le fil de messages avec la différence dans le stockage de données de message brouillon (380).

2. Procédé de la revendication 1, comprenant en outre :
après avoir déterminé que l'autre message lié au message parent appartient au fil de messages, la présentation (1040) d'une option pour déplacer l'entrée stockée (820) vers le nouveau message enfant, dans lequel
la présentation de l'interface utilisateur de composition de message pour le nouveau message enfant se produit après la réception d'une commande pour déplacer (735) l'entrée stockée (820) vers le nouveau message enfant.

3. Procédé de la revendication 1 ou de la revendication 2, comprenant en outre la réception (715) de l'autre message lié au message parent pendant la réception (710) de l'entrée à partir du dispositif d'entrée utilisateur pour le message enfant, et la présentation d'une indication dans l'interface utilisateur de composition de message selon laquelle l'autre message lié au message parent a été reçu avant de quitter l'interface utilisateur de composition de message.

4. Procédé de l'une quelconque des revendications précédentes, comprenant en outre, après avoir stocké l'entrée et quitté l'interface utilisateur de composition de message et avant de recevoir la commande pour générer le nouveau message enfant les étapes consistant à :
recevoir (715) une pluralité de messages comportant l'autre message, message lié au message parent, au moins un de la pluralité de messages appartenant à un fil de messages différent ; et
présenter (1010) chacun de la pluralité de messages dans une interface utilisateur de présentation de message.

5. Procédé de la revendication 4, dans lequel la présentation chacun de la pluralité de messages dans l'interface utilisateur de présentation de message comprend la présentation d'un contenu de corps de message de chacun de la pluralité de messages.

6. Procédé de l'une quelconque des revendications précédentes, dans lequel le stockage de l'entrée en association avec le fil de messages se produit en réponse à une commande de sauvegarde.

7. Support lisible par ordinateur non transitoire stockant un code qui, lorsqu'il est exécuté par un ou plusieurs processeurs (202) d'un dispositif de communication (200), amène le dispositif à mettre en œuvre toutes les étapes du procédé de l'une quelconque des revendications précédentes.

8. Dispositif de communication (200) comprenant :
une mémoire (206, 208) ;
au moins un dispositif d'entrée utilisateur (214, 220) ;
un sous-système de communication (216a-216n) ; et
au moins un processeur (202) en communication fonctionnelle avec la mémoire (206, 208), le au moins un dispositif d'entrée utilisateur (214, 220), et le sous-système de communication (216a-216n), le au moins un processeur (202) étant configuré pour :
recevoir (810), en utilisant le au moins un dispositif d'entrée utilisateur, une entrée dans une interface utilisateur de composition de message pour un message enfant d'un message parent dans un fil de messages ;
sans envoyer le message enfant, stocker (820) l'entrée reçue en association avec le fil de messages dans la mémoire (206, 208) ;
quitter (825) l'interface utilisateur de composition de message ;
recevoir (700 ; 1015) une commande pour générer un nouveau message enfant pour un autre message lié au message parent en utilisant le au moins un dispositif d'entrée utilisateur ;
déterminer (725 ; 1020, 1025) que l'autre message lié au message parent appartient au fil de messages ;
présenter (750 ; 1055) dans l'interface utilisateur de composition de message pour le nouveau message enfant, un contenu de corps de message pour le nouveau message enfant comportant l'entrée stockée (820) récupérée de la mémoire ; et
transmettre (760 ; 1065) le nouveau message enfant à au moins un destinataire en utilisant le sous-système de communication,
dans lequel le message enfant comprend une réponse ou un transfert du message parent dans le fil de messages, et le stockage (820) de l'entrée reçue en association avec le fil de messages dans la mémoire (206, 208) comprend :
la détermination (900, 905) d'une différence entre un contenu de corps de message du message enfant et un contenu de corps de message du message parent ;
le stockage (915) de la différence dans un stockage de données de message brouillon (380) ; et
l'association (915) d'un identifiant pour le fil de messages avec la différence dans le stockage de données de message brouillon (380).

9. Dispositif de communication de la revendication 8, dans lequel le au moins un processeur (202) est en outre configuré pour, après avoir stocké (820) l'entrée et quitté (825) l'interface utilisateur de composition de message et avant de recevoir (700 ; 1015) la commande pour générer le nouveau message enfant, les étapes consistant à :
recevoir (715), en utilisant le sous-système de communication, une pluralité de messages comportant l'autre message lié au message parent, au moins un de la pluralité de messages appartenant à un fil de messages différent ; et
présenter (1010) chacun de la pluralité de messages dans une interface utilisateur de présentation de message.

10. Dispositif de communication de la revendication 9, dans lequel la présentation de chacun de la pluralité de messages dans l'interface utilisateur de présentation de message comprend la présentation d'un contenu de corps de message de chacun de la pluralité de messages.

11. Dispositif de communication de l'une quelconque des revendications 8 à 10, dans lequel le stockage de l'entrée en association avec le fil de messages se produit en réponse à une commande de sauvegarde.
